# EUROPÄISCHE PATENTSCHRIFT

(11) **EP 3 146 225 B1**
(45) Veröffentlichungstag und Bekanntmachung des Hinweises auf die Patenterteilung: **07.07.2021**
(21) Anmeldenummer: 15737965.2
(22) Anmeldetag: 19.05.2015
(51) Int. Cl.: F16D 13/58

(54) **FEDERANORDNUNG FÜR EINE REIBUNGSKUPPLUNG**
SPRING ARRANGEMENT FOR A FRICTION CLUTCH
DISPOSITIF DE RESSORT POUR UN EMBRAYAGE À FRICTION

(30) Priorität: 20.05.2014 DE 102014209594; 16.09.2014 DE 102014218541
(43) Veröffentlichungstag der Anmeldung: 29.03.2017
(73) Patentinhaber: Schaeffler Technologies AG & Co. KG, 91074 Herzogenaurach (DE)
(72) Erfinder: LORAN, Igor, 77839 Lichtenau (DE); REICHERT, Christophe, 67480 Roeschwoog (FR)
(86) Internationale Anmeldenummer: PCT/DE2015/000247
(87) Internationale Veröffentlichungsnummer: WO 2015/176701

(56) Entgegenhaltungen:
- WO-A1-2014/019584
- DE-A1-102009 045 980
- DE-A1-102013 202 172

## Beschreibung

Die vorliegende Erfindung betrifft eine Federanordnung für eine Reibungskupplung gemäß dem Oberbegriff des Patentanspruchs 1. Insbesondere betrifft die Erfindung eine Federanordnung für eine Reibungskupplung, welche insbesondere für einen Antriebsstrang eines von einer Brennkraftmaschine angetriebenen Kraftfahrzeugs geeignet ist und mindestens zwei Federn, nämlich eine Tellerfeder und eine Zusatzfeder aufweist, wobei die Tellerfeder zur Verlagerung einer Anpressplatte der Reibungskupplung vorgesehen ist und die Zusatzfeder die Tellerfeder mit einer Zusatzkraft beaufschlagt.

Eine Federanordnung für einen Antriebsstrang eines Kraftfahrzeugs ist beispielsweise bei einer aus der DE 10 2013 216 065 A1 bekannten Reibungskupplung vorhanden. Diese Reibungskupplung weist zusätzlich zu einer Tellerfeder eine zweite Feder auf, welche als Servofeder fungiert und dazu dient, in einem Verschleißzustand eine Betätigungskraft zu reduzieren.

Aus der DE 40 13 186 C2 ist eine Federanordnung einer Kupplung bekannt, welche eine in diesem Fall als Membranfeder bezeichnete Tellerfeder und eine weitere Tellerfeder umfasst. Beide Federn sind Teile einer Anordnung, welche als Kupplungsabdeckungsausbildung bezeichnet ist und sich durch eine kurze axiale Baulänge sowie einen einfachen Zusammenbau auszeichnen soll.

Die DE 10 2013 221 836 A1 offenbart eine Deckelanordnung für eine Reibungskupplung, bei welcher eine Tellerfeder mit Hilfe mehrerer Kippringe gelagert ist. Durch eine gewellte Form eines Kipprings ist hierbei eine Stützfläche, an welcher die Tellerfeder anliegt, in axialer Richtung der Reibungskupplung elastisch nachgiebig gestaltet.

Aus der DE 10 2013 225 355 A1 ist eine Betätigungsvorrichtung für eine Kupplung sowie ein elektrisches Fahrmodul, insbesondere für ein Hybridfahrzeug, bekannt. Das elektrische Fahrmodul umfasst einen elektrischen Fahrmotor, in dessen Rotor eine Kupplung integriert ist.

In Kupplungssystemen können wegbegrenzte Ausrücker oder kraft- oder momentengesteuerte Ausrücker zum Einsatz kommen. Ein wegbegrenzter Ausrücker kann einen sogenannten "Concentric slave cylinder" umfassen. Zum Stand der Technik wird in diesem Zusammenhang beispielhaft auf die DE 10 2012 211 876 A1 verwiesen.

Aus der DE 10 2013 202 172 A1 ist eine Federanordnung für eine Reibungskupplung bekannt, die auf den Oberbegriff des Patentanspruchs 1 lesbar ist.

Der Erfindung liegt die Aufgabe zugrunde, eine sowohl raumsparende als auch robuste Federanordnung für eine Reibungskupplung anzugeben, welche besonders für kraft- oder momentengesteuerte Ausrücker, beispielsweise in einem Hybridmodul eines Kraftfahrzeugs, geeignet ist.

Die Aufgabe wird erfindungsgemäß gelöst durch eine Federanordnung mit den Merkmalen des Patentanspruchs 1. Bevorzugte Ausführungsbeispiele sind in den abhängigen Patentansprüchen dargelegt.

Diese in einer Reibungskupplung einsetzbare Federanordnung umfasst eine an einem Kupplungsdeckel vorzugsweise mit Hilfe mehrerer Bolzen gelagerte Tellerfeder sowie eine mit der Tellerfeder zusammenwirkende Zusatzfeder, welche axial zwischen dem Kupplungsdeckel und der Tellerfeder angeordnet ist, wobei die Anordnung aus Tellerfeder und Zusatzfeder mindestens eine unstetige Änderung der Federhärte aufweist. Die Unstetigkeit der Federhärte drückt sich in einem Knick in der Federkennlinie aus. Unter der Federhärte wird das Verhältnis zwischen der Änderung der durch die Feder ausgeübten Kraft und der Änderung der Auslenkung der Feder verstanden.

Die Unstetigkeit, das heißt sprunghafte Änderung der Federhärte, ist auf einfache Weise durch einen Zwischenanschlag der Zusatzfeder realisierbar, welcher zwischen den beiden Extrempunkten der Auslenkung der Zusatzfeder liegt. Sobald der Zwischenanschlag bei der Verformung der Zusatzfeder - ausgehend von geringen Federkräften in Richtung zu größeren Federkräften - erreicht wird, werden bis zu diesem Punkt noch nicht verformte Bereiche der Zusatzfeder in den Vorgang der Verformung einbezogen, wodurch die Federhärte schlagartig steigt. Vorzugsweise liegt der Zwischenanschlag asymmetrisch im Auslenkungsbereich, nämlich näher an demjenigen Extrempunkt des Auslenkbereichs der Zusatzfeder, an welchem die durch die Zusatzfeder ausgeübte Federkraft maximal ist. Der Auslenkbereich bezieht sich auf den in die Kupplung eingebauten Zustand der Zusatzfeder. Dadurch, dass sich die räumliche Lage des Zwischenanschlags, jedenfalls in axialer Richtung der Reibungskupplung, nicht ändert, solange lediglich der dem Zwischenanschlag vorgelagerte, leichter nachgiebige Bereich der Zusatzfeder verformt wird, ist ein besonders präzises Einfederverhalten der Zusatzfeder und damit der gesamten Anordnung aus Zusatz- und Tellerfeder erzielbar. Insbesondere ist hierdurch die Lage der sprungartigen Erhöhung der Federhärte genau definierbar.

In vorteilhafter Ausgestaltung ist das bei der Betätigung der Reibungskupplung gegeben mehrstufige, unstetige Federverhalten durch eine ringförmige, einteilig ausgebildete, insbesondere aus Stahlblech geformte, Zusatzfeder realisiert, welche - ebenso wie eine Tellerfeder - eine konische Grundform hat. Die Tellerfeder und die Zusatzfeder wirken bei der Betätigung der Reibungskupplung, soweit die Zusatzfeder eine den Betätigungsvorgang beeinflussende Federkraft ausübt, in dieselbe Richtung.

Die die Tellerfeder sowie die Zusatzfeder umfassende Federanordnung ist besonders für kraft- oder momentengesteuerte Ausrücker von Kupplungssystemen geeignet. Mithilfe der Zusatzfeder wird hierbei während des Ausrückvorgangs eine stark ansteigende Gegenkraft erzeugt, welche der Steuerung des Ausrückers signalisiert, dass der Ausrückvorgang zu beenden ist. Wäre dies nicht der Fall, so könnten in Abhängigkeit von den geometrischen Gegebenheiten des Kupplungssystems die Federzungen der Tellerfeder mit der Kupplungsscheibe der Reibungskupplung kollidieren. Ausgehend von einer Reibungskupplung mit einer herkömmlichen Tellerfeder kann die Zusatzfeder auf einfache Weise in eine Kupplung grundsätzlich bekannter Bauform integriert werden, ohne zusätzlichen Bauraum zu beanspruchen. Ebenso sind durch den Einbau der Zusatzfeder keine gravierenden Änderungen in der Montage der Kupplung erforderlich.

Die Montage der Reibungskupplung kann folgende Schritte beinhalten:
- Der Kupplungsdeckel wird in eine Werkzeugaufnahme gelegt,
- auf dem Kupplungsdeckel wird, konzentrisch zu diesem, die Zusatzfeder positioniert,
- ein erster Drahtring wird auf die Zusatzfeder gelegt,
- auf den Drahtring wird die Tellerfeder gelegt,
- ein zweiter Drahtring wird auf die Tellerfeder gelegt,
- mehrere Bolzen werden durch die Anordnung aus Kupplungsdeckel, Teller- und Zusatzfeder sowie Drahtringen gesteckt und vernietet.

In bevorzugter Ausgestaltung ist der Außendurchmesser der ringförmigen Zusatzfeder geringer als der Außendurchmesser der Tellerfeder. Auch radial nach innen wird die Zusatzfeder vorzugsweise von der Tellerfeder überragt. Die Zusatzfeder kann einen inneren und einen äußeren Kraftrand aufweisen, wobei der Zwischenanschlag durch radial zwischen den Krafträndern angeordnete Laschen gebildet ist, welche zur Tellerfeder hin abgebogen sind und damit im Vergleich zu radial weiter außen liegenden Bereichen der Zusatzfeder mehr in Axialrichtung, bezogen auf die mit der Symmetrieachse-der Tellerfeder sowie der Zusatzfeder identische Rotationsachse der Reibungskupplung, weisen. Die als Federelemente wirkenden Laschen erstrecken sich vorzugsweise innerhalb der ringförmigen Zusatzfeder von außen nach innen, wobei sie von einem ringförmigen, den äußeren Kraftrand der Zusatzfeder bildenden Bereich, welcher auch als Außenring bezeichnet wird, ausgehen.

Jeder der beiden Kraftränder der Zusatzfeder kann entweder eine geschlossene kreisförmige Kontur oder eine durch Schlitze, Kerben oder sonstige Aussparungen unterbrochene Kreiskontur beschreiben. Somit kann beispielsweise nur der Innenrand der Zusatzfeder komplett kreisförmig sein, während der Außenrand von einer Kreisform abweicht. In anderen Ausgestaltungen ist dagegen der Außenrand der Zusatzfeder kreisförmig, während am Innenrand eine unterbrochene Kreiskontur vorliegt. Schließlich sind Ausführungsformen realisierbar, bei welchen sowohl der Innenrand als auch der Außenrand nur abschnittsweise eine Kreisform beschreibt.

Der innere Kraftrand und der äußere Kraftrand der Zusatzfeder sind an mehreren Stellen ihres Umfangs durch im Wesentlichen in radiale Richtung, in geringerem Maße in axiale Richtung verlaufende Stege miteinander verbunden. Zwischen zwei in Umfangsrichtung benachbarten Stegen kann jeweils eine Mehrzahl an Laschen angeordnet sein, welche den Zwischenanschlag bilden. Durch die im Vergleich zu den Stegen hohe Anzahl an Laschen ist eine besonders gleichförmige, über den Umfang der Federanordnung verteilte Kraftübertragung zwischen Tellerfeder und Zusatzfeder gegeben. Die Laschen der Zusatzfeder stellen im Vergleich zum Durchmesser der Zusatzfeder sehr kurze und damit steife zusätzliche Federzungen dar, welche rationell als integrale Bestandteile der Zusatzfeder herstellbar sind.

Unabhängig davon, ob der innere Kraftrand durch Schlitze oder sonstige Aussparungen unterbrochen ist, ist innerhalb des inneren Kraftrandes vorzugsweise eine Kuppe ausgeformt, die die Kontaktstelle zur Tellerfeder bildet. Abweichend hiervon kann die Kontaktstelle zur Tellerfeder auch durch eine geprägte Kante am Innenrand der Zusatzfeder gebildet sein.

In einer der beiden möglichen Endpositionen der Tellerfeder, nämlich bei komplett eingerückter Kupplung, ist die Zusatzfeder von der Tellerfeder beabstandet, sodass die Zusatzfeder bei beginnender Betätigung der Reibungskupplung, das heißt bei beginnendem Ausrückvorgang, noch nicht an der Tellerfeder anschlägt. Zu Beginn der Betätigung der Tellerfeder wird somit durch die Zusatzfeder auf die Tellerfeder zunächst keine Kraft ausgeübt; bei Erreichen eines äußeren Anschlags der Zusatzfeder wird dann eine geringe bis mäßige Kraft ausgeübt und erst bei Erreichen des Zwischenanschlags wirkt eine hohe Kraft, durch welche der Ausrückvorgang - beispielsweise bei einer Kraft in Höhe von 2.000 N - schließlich gestoppt wird. Der letztgenannte Bereich, welcher nach dem Kontaktieren des Zwischenanschlags durchfahren wird, wird als anschlagnaher Bereich der Zusatzfeder bezeichnet. Im Unterschied hierzu wird der Bereich der Zusatzfeder, welcher vor Erreichen des Zwischenanschlags durchfahren wird, als anschlagferner Bereich der Zusatzfeder bezeichnet. Vorzugsweise ist die Federhärte der Zusatzfeder im anschlagnahen Bereich mindestens viermal so hoch, insbesondere mindestens acht Mal so hoch, wie im anschlagfernen Bereich. Von einem anschlagnahen Bereich wird auch dann gesprochen, wenn der Betätigungsvorgang, das heißt die Verlagerung der Anpressplatte, allein durch die hierbei ansteigende, auf die Anordnung aus Teller- und Zusatzfeder aufgebrachte Kraft, nicht durch Erreichen eines mechanischen Anschlags, gestoppt wird.

Je nach Auslegung der Tellerfeder und der Zusatzfeder kann der Ausrückvorgang regelmäßig entweder bereits vor dem Erreichen des Zwischenanschlags oder nach dem Erreichen des Zwischenanschlags gestoppt werden. Im erstgenannten Fall stellt derjenige Bereich der Zusatzfeder, welcher ab dem Erreichen des Zwischenanschlags - unter Ausübung besonders hoher Kräfte - verformt wird, ein Sicherungselement der Federanordnung dar, welches insbesondere im Hinblick auf Toleranzen innerhalb der Reibungskupplung von praktischer Bedeutung ist. In beiden Fällen handelt es sich bei der Reibungskupplung vorzugsweise um eine im nicht betätigten Zustand geschlossene Kupplung.

Ein Vorteil der Erfindung liegt insbesondere darin, dass durch eine Zusatzfeder mit integriertem Zwischenanschlag ein Sensor bereitgestellt wird, welcher ohne zusätzlichen Bauraumbedarf in rationeller Weise in eine Reibungskupplung eines Antriebsstrangs, beispielsweise in einem Hybridmodul eines Fahrzeugs, einbaubar ist und zuverlässig Überbeanspruchungen oder Fehlbedienungen der Kupplung verhindert.

Nachfolgend werden zwei Ausführungsbeispiele der Erfindung sowie - lediglich zum Vergleich - eine nicht beanspruchte, einfachere Bauform einer Kupplung anhand einer Zeichnung näher erläutert. Hierin zeigen:
- Fig. 1: ein erstes Ausführungsbeispiel einer Kupplung mit Zusatzfeder in perspektivischer Darstellung,
- Fig. 2: die Kupplung nach Figur 1 in Explosionsdarstellung,
- Fig. 3: die Zusatzfeder der Kupplung nach Figur 1,
- Fig. 4 und 5: Einzelheiten der Zusatzfeder,
- Fig. 6 und 7: Schnittdarstellungen der Kupplung nach Figur 1,
- Fig. 8: eine Ausrückkraftkennlinie der Kupplung nach Figur 1,
- Fig. 9: eine abgewandelte Zusatzfeder für eine Kupplung,
- Fig. 10: eine nicht beanspruchte Kupplung.

Einander entsprechende oder prinzipiell gleich wirkende Teile sind in allen Figuren mit den gleichen Bezugszeichen gekennzeichnet.

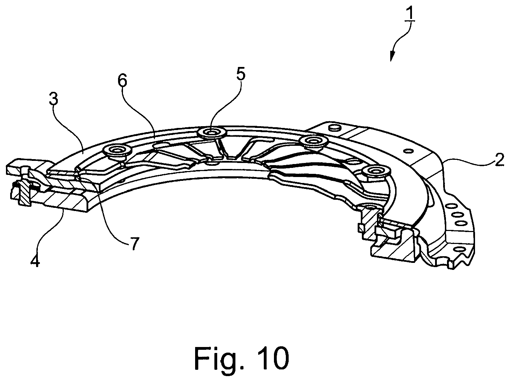

Zunächst wird auf die in Figur 10 gezeigte Schnittdarstellung Bezug genommen, welche wesentliche Komponenten einer nicht beanspruchten Reibungskupplung 1, kurz auch als Kupplung bezeichnet, zeigt. Erkennbar ist ein Kupplungsdeckel 2, eine in der Anordnung nach Figur 10 oberhalb des Kupplungsdeckels liegende Tellerfeder 3, sowie eine unterhalb des Kupplungsdeckels 2 liegende Anpressplatte 4, welche dazu vorgesehen ist, eine nicht dargestellte Kupplungsplatte gegen eine Gegendruckplatte zu pressen. Im Kupplungsdeckel 2 sind mehrere Bolzen 5 befestigt, welche auch Öffnungen in der Tellerfeder 2 durchdringen. Die Bolzen 5 sind von Drahtringen 6,7 umgeben, welche Auflagebereiche für die Tellerfeder 3 bilden. Die Kupplung 1 nach Figur 10 wird durch ein nicht dargestelltes hydraulisches Ausrücksystem betätigt.

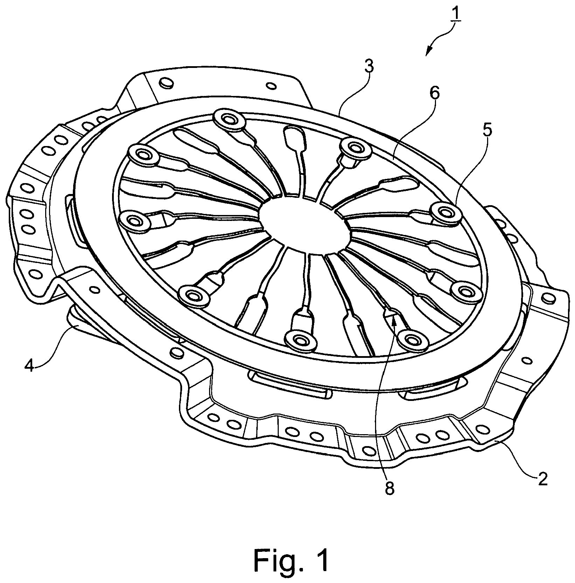

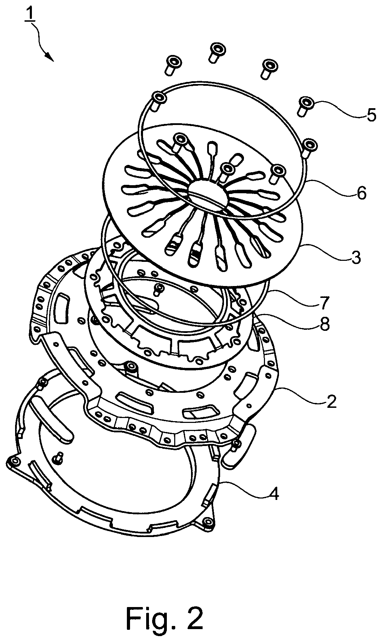

Die in Figur 1 dargestellte Reibungskupplung 1, welche alle erfindungsgemäßen Merkmale realisiert, entspricht in ihrer grundsätzlichen Funktion der Reibungskupplung 1 nach Figur 10 und ist ebenfalls zur Verwendung in einem Antriebsstrang eines Kraftfahrzeugs vorgesehen. Die in Figur 1 ebenso wie in Figur 2 unten angeordnete Seite der Kupplung 1 ist dem Verbrennungsmotor, die oben angeordnete Seite dem Getriebe im Antriebsstrang eines Kraftfahrzeugs zugewandt.

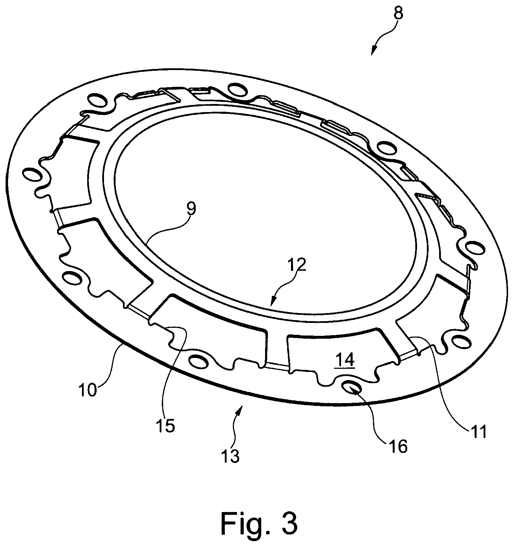

Die Kupplung 1 nach Figur 1 wird durch einen nicht dargestellten kraftgesteuerten Ausrücker betätigt. Im Unterschied zur Bauform nach Figur 10 weist die Kupplung 1 nach Figur 1 eine Zusatzfeder 8 auf, welche in den Figuren 3 bis 5 genauer dargestellt ist und im Folgenden näher erläutert wird. Von der Motorseite in Richtung zur Getriebeseite der Kupplung 1 betrachtet, weist die Kupplung 1, axial in einer Reihe angeordnet, die Komponenten Anpressplatte 4, Kupplungsdeckel 2, Zusatzfeder 8 und Tellerfeder 3 auf, wobei die drei letztgenannten Komponenten 2,8,3 mit Hilfe der Bolzen 5 sowie Drahtringe 6,7 zusammengehalten sind.

Bei der Zusatzfeder 8 handelt es sich um eine einteilige, ringförmige Feder, welche zwei Ringe 9,10, nämlich einen Innenring 9 und einen Außenring 10, als integrale Bestandteile aufweist, die durch neun Stege 11 einstückig miteinander verbunden sind.

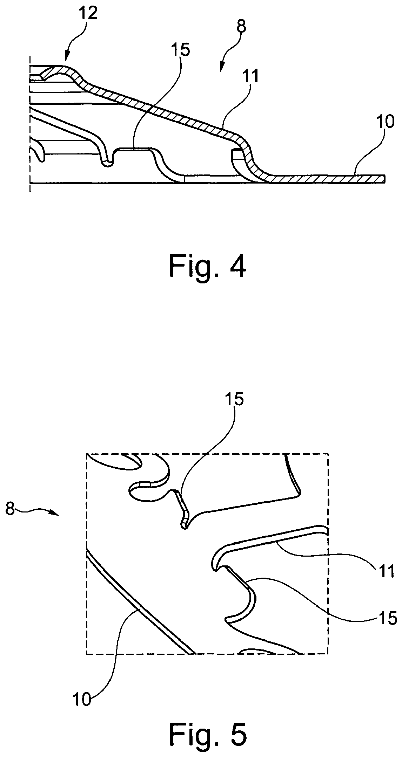

Durch den Innenring 9 ist ein innerer Kraftrand 12, durch den Außenring 10 ein äußerer Kraftrand 13 gebildet. Wie insbesondere aus Figur 4 hervorgeht, ist der innere Kraftrand 12 kuppenförmig gestaltet. Der Innenring 9, der Außenring 10, sowie zwei in Umfangsrichtung benachbarte Stege 11 begrenzen jeweils eine Aussparung 14 in der Zusatzfeder 8. In jede Aussparung 14 ragen vom Außenring 10 aus zwei Laschen 15, wobei die insgesamt achtzehn Laschen 15 zusammen einen Zwischenanschlag der Zusatzfeder 8 bilden. Die Enden der Laschen 15 sind in axialer Richtung der Kupplung 1 ausgerichtet. Jeweils zwischen zwei in dieselbe Aussparung 14 ragende Laschen 15 befindet sich innerhalb des Außenrings 10 eine kreisrunde Öffnung 16, welche bei fertig montierter Kupplung 1 von einem Bolzen 5 durchdrungen wird.

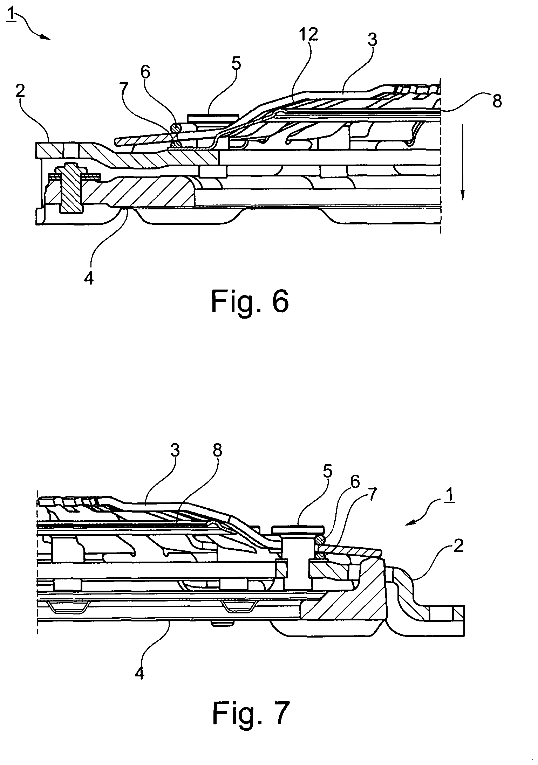

Zur Einbausituation der Zusatzfeder 8 innerhalb der Reibungskupplung 1 wird insbesondere auf die Figuren 6 und 7 verwiesen. Die Zusatzfeder 8 ist axial zwischen dem Kupplungsdeckel 2 und der Tellerfeder 3 angeordnet, wobei sie sowohl radial nach innen als auch radial nach außen von der Tellerfeder 3 überragt wird. Der Außenring 10 der Zusatzfeder 8 ist zwischen den Drahtring 7 und den Kupplungsdeckel 2 eingeklemmt. Dagegen hat der Innenring 9 der Zusatzfeder 8, wie in Figur 6 dargestellt, im nicht ausgerückten Zustand der Kupplung 1 keinen Kontakt zum Kupplungsdeckel 2 oder zur Tellerfeder 3. Erst während des Ausrückvorgangs, in Figur 6 durch einen Pfeil in Axialrichtung der Kupplung 1 angedeutet, kontaktiert die Tellerfeder 3 die Zusatzfeder 8, wobei der durch den Innenring 9 gebildete Kraftrand 12 einen ersten, äußeren Anschlag der Zusatzfeder 8 bildet. Durch die über den inneren Kraftrand 9 übertragene Kraft wird die Ausrückkraft, welche auf die Tellerfeder 3 aufzubringen ist, moderat erhöht. Im Laufe des weiteren Ausrückvorgangs wird bei einer definierten Stellung der Tellerfeder 3 der durch die Laschen 15 gebildete Zwischenanschlag der Zusatzfeder 8 erreicht, womit sich die Federhärte der Zusatzfeder 8 schlagartig um ein Mehrfaches erhöht.

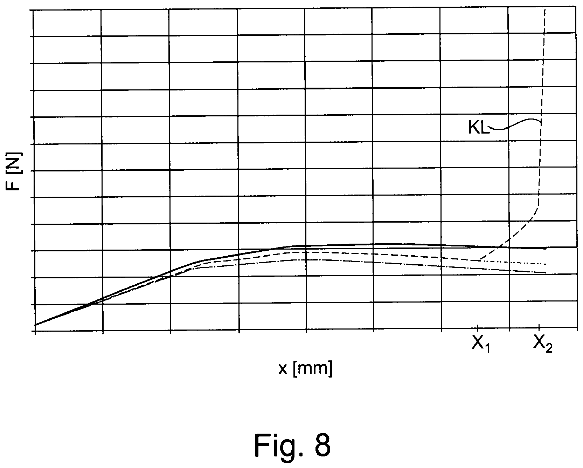

Die unstetige Änderung der Federhärte der Zusatzfeder 8 ist im Detail der Ausrücckraftkennlinie nach Figur 8, kurz als Kennlinie KL bezeichnet, entnehmbar, wobei in Figur 8 zum Vergleich auch Kennlinien von nicht beanspruchten Federanordnungen ohne Zusatzfeder eingezeichnet sind. In Abhängigkeit vom Ausrückweg x ist die Ausrückkraft F dargestellt. Bis zum Punkt X₁ ist die Zusatzfeder 8, ausgehend von dem in Figur 6 dargestellten Zustand der Kupplung 1, ohne Funktion. Das Erreichen des Punktes X₁ ist mit dem Anschlagen der Tellerfeder 3 am Kraftrand 12 des Innenrings 9 gleichbedeutend. Zwischen dem Punkt X₁ und dem Punkt X₂ wird der Innenring 9 der Zusatzfeder 8 durch die Tellerfeder 3 ausgelenkt, während noch kein Kontakt zwischen der Tellerfeder 3 und den Laschen 15 gegeben ist. Dieser Kontakt wird erst mit dem Erreichen des Punktes X₂ hergestellt, wodurch sich die Federhärte der Zusatzfeder 8 drastisch, nämlich auf mehr als das Vierfache der vor dem Erreichen des durch die Laschen 15 gebildeten Zwischenanschlags gegebenen Federhärte, erhöht. Spätestens nach dem Erreichen des Punktes X₂ steigt die Ausrückkraft F auf einen Betrag an, welcher zuverlässig zur Beendigung des Ausrückvorgangs, beispielsweise bei 2.000 Newton, führt.

Insgesamt sind damit drei Bereiche klar unterscheidbarer Federhärte der Anordnung aus Tellerfeder 3 und Zusatzfeder 8 gegeben: Erstens der Bereich bis zum Punkt X₁, in welchem die Zusatzfeder 8 noch nicht in Funktion ist; zweitens der zwischen den Punkten X₁ und X₂ liegende Bereich, in dem die Zusatzfeder 8 mit Ausnahme der federnden Laschen 15 in Funktion ist, und drittens ein Bereich ab dem Punkt X₂, in welchem die gesamte Zusatzfeder 8 einschließlich deren Laschen 15 zu deren Federwirkung beiträgt. Die Breite der drei Bereiche nimmt vom ersten zum dritten Bereich ab.

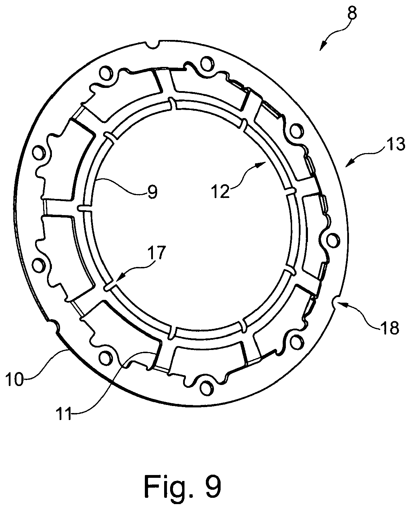

Das Ausführungsbeispiel nach Figur 9, welches ebenfalls für die Kupplung 1 nach Figur 1 geeignet ist, unterscheidet sich vom vorstehend erläuterten Ausführungsbeispiel durch die Gestaltung der Kraftränder 12,13. Jeder Kraftrand 12,13 ist mehrfach durch Aussparungen 17,18 unterbrochen, welche sich am Innenring 9 und am Außenring 10 voneinander unterscheiden. Während der innere Kraftrand 12 durch Aussparungen in Form schmaler Schlitze 17 neunfach - entsprechend der Anzahl der Stege 11 - unterbrochen ist, befinden sich am äußeren Kraftrand 12 lediglich drei Aussparungen 18 in Form halbkreisförmiger Ausnehmungen. Diese Ausnehmungen 18 erleichtern sowohl die Zentrierung der Zusatzfeder 8 während des Umformens als auch die Zentrierung der Zusatzfeder 8 am Kupplungsdeckel 2. Die am Innenumfang der Zusatzfeder 8 erkennbaren schlitzförmigen Aussparungen 17 tragen beim Umformvorgang zur Vermeidung von Quetschungen im Bereich des inneren Kraftrandes 12 bei.

Die gesamte, einteilige Zusatzfeder 8 ist sowohl im Ausführungsbeispiel nach Figur 1 als auch im Ausführungsbeispiel nach Figur 9 aus Stahlblech einer Wandstärke gefertigt, welche geringer als die Wandstärke der Tellerfeder 3 ist. Aufgrund der geometrischen Gestaltung der Zusatzfeder 8 mit besonders kurzen, nach innen gerichteten Laschen 15 wird durch die Zusatzfeder 8 eine dem Ausrückvorgang entgegenwirkende Zusatzkraft erzeugt, welche die durch die Tellerfeder 3 erzeugte, in die gleiche Richtung wirkende Kraft um ein Mehrfaches übersteigt.

## Patentansprüche

1. Federanordnung für eine Reibungskupplung (1), umfassend eine an einem Kupplungsdeckel (2) gelagerte Tellerfeder (3) sowie eine Zusatzfeder (8), wobei die Tellerfeder (3) zur Verlagerung einer Anpressplatte (4) und die Zusatzfeder zur Beaufschlagung der Tellerfeder (3) mit einer Zusatzkraft ausgebildet ist, wobei die Zusatzfeder (8) axial zwischen dem Kupplungsdeckel (2) und der Tellerfeder (3) angeordnet ist und die die Tellerfeder (3) sowie die Zusatzfeder (8) umfassende Anordnung mindestens eine unstetige Änderung der Federhärte aufweist, **dadurch gekennzeichnet, dass** die Zusatzfeder (8) in einer Endposition der Tellerfeder (3) von dieser beabstandet ist.

2. Federanordnung nach Anspruch 1, **dadurch gekennzeichnet, dass** die unstetige Änderung der Federhärte durch einen Zwischenanschlag der Zusatzfeder (8) gebildet ist.

3. Federanordnung nach Anspruch 2, **dadurch gekennzeichnet, dass** die Zusatzfeder (8) einteilig ausgebildet ist.

4. Federanordnung nach Anspruch 3, **dadurch gekennzeichnet, dass** die Zusatzfeder (8) ringförmig ist.

5. Federanordnung nach Anspruch 4, **dadurch gekennzeichnet, dass** die Zusatzfeder (8) einen inneren Kraftrand (12) und einen äußeren Kraftrand (13) aufweist, wobei der Zwischenanschlag durch radial zwischen dem inneren Kraftrand (12) und dem äußeren Kraftrand (13) angeordnete, axial in Richtung zur Tellerfeder (8) abgebogene Laschen (15) gebildet ist.

6. Federanordnung nach Anspruch 5, **dadurch gekennzeichnet, dass** mindestens ein Kraftrand (12,13) der Zusatzfeder (8) eine geschlossene kreisförmige Kontur beschreibt.

7. Federanordnung nach Anspruch 5, **dadurch gekennzeichnet, dass** mindestens ein Kraftrand (12,13) der Zusatzfeder (8) eine durch Aussparungen (17) unterbrochene Kreiskontur beschreibt.

8. Federanordnung nach einem der Ansprüche 5 bis 7, **dadurch gekennzeichnet, dass** der innere Kraftrand (12) mit dem äußeren Kraftrand (13) durch Stege (11) verbunden ist und in Umfangsrichtung zwischen zwei Stegen (11) jeweils eine Mehrzahl an den Zwischenanschlag bildenden Laschen (15) angeordnet ist.

9. Federanordnung nach einem der Ansprüche 1 bis 8, **dadurch gekennzeichnet, dass** ein anschlagnaher Bereich der Zusatzfeder (8) in Relation zu einem anschlagfernen Bereich der Zusatzfeder (8) mindestens die vierfache Federhärte aufweist.

## Claims

1. A spring arrangement for a friction clutch (1), comprising a diaphragm spring (3) mounted on a clutch cover (2) and an additional spring (8), the diaphragm spring (3) being designed to move a pressure plate (4) and the additional spring being designed to apply an additional force to the diaphragm spring (3), the additional spring (8) being arranged axially between the clutch cover (2) and the diaphragm spring (3) and the arrangement comprising the diaphragm spring (3) and the additional spring (8) having at least one discontinuous change in spring hardness, **characterised in that** the additional spring (8) is spaced apart from the diaphragm spring (3) in an end position thereof.

2. The spring arrangement according to claim 1, **characterised in that** the discontinuous change in spring hardness is caused by an intermediate stop of the additional spring (8).

3. The spring arrangement according to claim 2, **characterised in that** the additional spring (8) is formed in one piece.

4. The spring arrangement according to claim 3, **characterised in that** the additional spring (8) is ring-shaped.

5. The spring arrangement according to claim 4, **characterised in that** the additional spring (8) has an inner force edge (12) and an outer force edge (13), the intermediate stop being formed by lugs (15) arranged radially between the inner force edge (12) and the outer force edge (13) and bent axially in the direction of the diaphragm spring (8).

6. The spring arrangement according to claim 5, **characterised in that** at least one force edge (12, 13) of the additional spring (8) describes a closed circular contour.

7. The spring arrangement according to claim 5, **characterised in that** at least one force edge (12, 13) of the additional spring (8) describes a circular contour interrupted by recesses (17).

8. The spring arrangement according to one of claims 5 to 7, **characterised in that** the inner force edge (12) is connected to the outer force edge (13) by way of webs (11) and a plurality of lugs (15) forming the intermediate stop is arranged in each circumferential direction between two webs (11).

9. The spring arrangement according to one of claims 1 to 8, **characterised in that** a region of the additional spring (8) close to the stop has at least four times the spring hardness in relation to a region of the additional spring (8) far away from the stop.

## Revendications

1. Dispositif de ressort pour un embrayage à friction (1), comprenant un ressort à disque (3) monté sur un couvercle d'embrayage (2) et un ressort supplémentaire (8), le ressort à disque (3) étant conçu pour déplacer un plateau de pression (4) et le ressort supplémentaire pour alimenter le ressort à disque (3) avec une force supplémentaire, le ressort supplémentaire (8) étant disposé dans le sens axial entre le couvercle d'embrayage (2) et le ressort à disque (3) et le dispositif comprenant le ressort à disque (3) et le ressort supplémentaire (8) présentant au moins un changement discontinu de la rigidité du ressort, **caractérisé en ce que** le ressort supplémentaire (8) est espacé du ressort à disque (3) dans une position de fin de course de celui-ci.

2. Dispositif de ressort selon la revendication 1, **caractérisé en ce que** le changement discontinu de la dureté du ressort est formé par une butée intermédiaire du ressort supplémentaire (8).

3. Dispositif de ressort selon la revendication 2, **caractérisé en ce que** le ressort supplémentaire (8) est formé en une seule pièce.

4. Dispositif de ressort selon la revendication 3, **caractérisé en ce que** le ressort supplémentaire (8) est de forme annulaire.

5. Dispositif de ressort selon la revendication 4, **caractérisé en ce que** le ressort supplémentaire (8) présente un bord de force interne (12) et un bord de force externe (13), la butée intermédiaire étant formée par des pattes (15) disposées de manière radiale entre le bord de force interne (12) et le bord de force externe (13), coudées dans le sens axial en direction du ressort à disque (8).

6. Dispositif de ressort selon la revendication 5, **caractérisé en ce qu'**au moins un bord de force (12, 13) du ressort supplémentaire (8) décrit un contour circulaire fermé.

7. Dispositif de ressort selon la revendication 5, **caractérisé en ce qu'**au moins un bord de force (12, 13) du ressort supplémentaire (8) décrit un contour circulaire interrompu par des évidements (17).

8. Dispositif de ressort selon l'une quelconque des revendications 5 à 7, **caractérisé en ce que** le bord de force interne (12) est relié au bord de force externe (13) par des entretoises (11) et une pluralité respective de pattes (15) formant la butée intermédiaire est disposée dans la direction circonférentielle entre deux entretoises (11).

9. Dispositif de ressort selon l'une quelconque des revendications 1 à 8, **caractérisé en ce qu'**une zone du ressort supplémentaire (8) à proximité de la butée présente au moins quatre fois la dureté du ressort par rapport à une zone du ressort supplémentaire (8) à distance de la butée.
